# EUROPEAN PATENT APPLICATION

(11) **EP 4 191 858 A1**
(43) Date of publication of application: **07.06.2023**
(21) Application number: 21849487.0
(22) Date of filing: 05.07.2021
(51) Int. Cl.: H02M 3/156, H02M 3/158

(54) **NON-ISOLATED SOFT SWITCH CIRCUIT**

(30) Priority: 31.07.2020 CN 202010763499
(71) Applicant: ZTE Corporation, Shenzhen, Guangdong 518057 (CN)
(72) Inventor: ZHU, Junjie, Shenzhen, Guangdong 518057 (CN); WANG, Linguo, Shenzhen, Guangdong 518057 (CN); GAO, Wei, Shenzhen, Guangdong 518057 (CN); ZHANG, Bin, Shenzhen, Guangdong 518057 (CN)
(74) Representative: Novagraaf Technologies
(86) International application number: PCT/CN2021/104403
(87) International publication number: WO 2022/022228

(57) **Abstract**

The embodiment of the present invention provides a non-isolated soft switching circuit comprising: an input power supply, a power conversion circuit, a transformer circuit, a controller and a load. The power conversion circuit includes a first inductance element, a first switching element and a first rectifying element. The first inductance element is respectively connected to the first switching element and the first rectifying element. A primary side circuit of the transformer circuit is connected to the first switching element in parallel. A secondary side circuit of the transformer circuit is connected to the first rectifying element in parallel. The controller is respectively connected to the first switching element and the transformer circuit. The input power supply is connected to the first inductance element through the first switching element. The load is connected to the power conversion circuit and the transformer circuit. By means of the embodiment of the present invention, switching losses of various elements in the power conversion circuit are effectively reduced.

## Description

### Cross-Reference to Related Application

The present disclosure claims the benefit of priority of Chinese patent application No.202010763499.7, entitled "NON-ISOLATED SOFT SWITCH CIRCUIT", filed on July 31, 2020, the entire contents of which are incorporated herein by reference.

### Technical Field

The embodiment of the present invention relates to the technical field of electronic circuits, in particular to a non-isolated soft switching circuit.

### Background

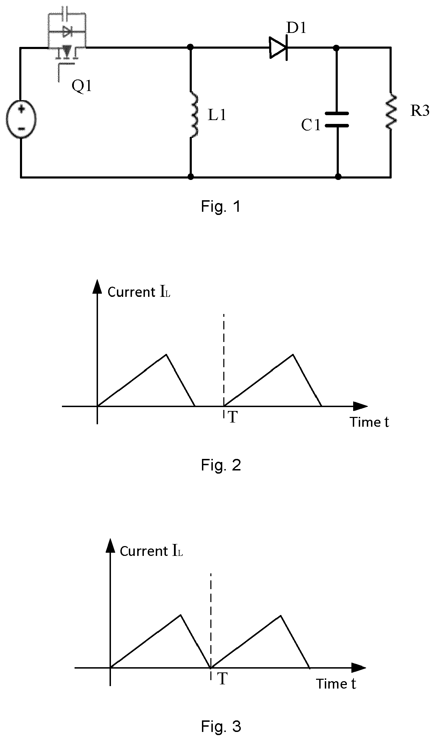

A Direct Current-Common (DC-C) power distribution system is adopted in a communication direct current power supply system for power distribution. In consideration of cost saving and design complexity reducing, buck-boost topology shown in Fig. 1 is commonly adopted in the current DC-C power distribution system for realizing a direct-current power supply function. Generally, a working principle thereof is as follows: a main power tube Q1 is turned on, and an input voltage Vin of a power supply enables an inductor L1 stores energy; and the Q1 is turned off, the inductor L1 releases energy through a diode D1, and provides an output voltage Vout for a load R1, and the process is operated in cycle to realize conversion from the input voltage Vin to the output voltage Vout.

However, it is found that in practice, the diode D1 may bear Vin+Vout voltage at the moment when the Q1 is turned on. In the reverse recovery process of the D1, the voltage will be directly applied to the Q1 for heat dissipation, which will generate high reverse recovery losses on the D1, meanwhile, at the moment of turning on, energy on the junction capacitor of the Q1 is directly instantly released through the turned-on Q1, which makes the Q1 generate high turn-on losses and junction capacitance losses.

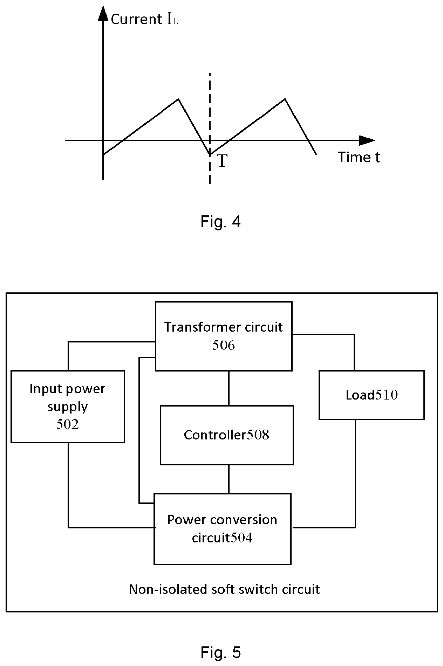

To solve a loss problem caused when the main power tube Q1 is turned on, there are three common working modes proposed for a buck-boost topological circuit in related technologies, which include:
1. A discontinuous conduction mode. As shown in Fig. 2, in the discontinuous conduction mode, a current of an inductor L is reduced to 0A before a power conversion period T is finished, so that the diode D1 can complete reverse recovery before the Q1 is turned on, avoiding the reverse recovery losses at a high voltage. The power conversion period T is a duration of adjacent two-time Q1 closing.
2. A boundary conduction mode. As shown in Fig. 3, in the boundary conduction mode, the current of the inductor L is right reduced to 0A when the power conversion period T is finished, so that the diode D1 can complete reverse recovery before the Q1 is turned on, avoiding the reverse recovery losses at high voltage.
3. A continuous conduction mode with minimum current zero crossing. Specifically, the diode D1 can be replaced with a field-effect tube so as to realize a synchronous rectification effect and obtain a current less than 0 (namely, a reverse current). As shown in Fig. 4, in the continuous conduction mode, the current of the inductor L is reduced to below 0A before the power conversion period T is finished, so that the D1 can directly complete reverse recovery through the reverse current, avoiding the reverse recovery losses at the high voltage.

Nevertheless, the above three modes all have the same defect that when the load is high, an average value of an induced current is large, and induced current zero crossing is difficult to achieve, which can be achieved when a maximum value of the induced current is two or more times of the average value. In addition, great copper losses and magnetic losses will be brought to the inductor in an induced current zero crossing realization process, the inductor is prone to damage, and meanwhile great turn-off losses will be brought to the Q1. In other words, when output power (or voltage) needing to be converted is high, the inductance losses and the turn-off losses caused by the above three modes are far greater than the reverse recovery losses of the D1. Thus, a buck-boost circuit in the related technologies still has problems that the main power tube has high turn-on losses, and the diode has high reverse recovery losses.

### Summary

The embodiment of the present invention provides a non-isolated soft switching circuit to solve a problem that a non-isolated circuit in related technologies has high switching losses.

An embodiment of the present invention provides a non-isolated soft switching circuit including: an input power supply, a power conversion circuit, a transformer circuit, a controller and a load. The power conversion circuit includes a first inductance element, a first switching element and a first rectifying element. The first inductance element is respectively connected to the first switching element and the first rectifying element. A primary side circuit of the transformer circuit is connected to the first switching element in parallel. A secondary side circuit of the transformer circuit is connected to the first rectifying element in parallel. The controller is respectively connected to the first switching element and the transformer circuit. The input power supply is connected to the first inductance element through the first switching element. The load is connected to the power conversion circuit and the transformer circuit.

In an exemplary embodiment, the transformer circuit includes: a transformer, a second switching element, a second rectifying element and a second inductance element, where the primary side circuit of the transformer circuit includes a primary side of the transformer and the second switching element, and the primary side of the transformer is connected to the second switching element in series; and the secondary side circuit of the transformer circuit includes a secondary side of the transformer, the second rectifying element and the second inductance element, where, the secondary side of the transformer, the second rectifying element and the second inductance element are connected in series.

In an exemplary embodiment, the transformer circuit further includes a third inductance element, wherein the third inductance element is connected to the primary side circuit of the transformer circuit in series.

In an exemplary embodiment, the controller is configured to control on-off states of the first switching element and the second switching element.

In an exemplary embodiment, in the case that the first rectifying element is a first diode, the controller is further configured to perform control, before the first switching element is turned on in a preset power conversion period, to turn on the transformer circuit, so that a closed loop can be formed between the primary side circuit of the transformer circuit and the first switching element, and a closed circuit can be formed between the secondary side circuit of the transformer circuit and the first diode, where the power conversion period is a duration of adjacent two-time closing of the first switching element.

In an exemplary embodiment, the controller is further configured to perform control, in the power conversion period, to turn off the transformer circuit after the first switching element is turned on and before the first switching element is turned off.

In an exemplary embodiment, before the first switching element is turned on, a current of the first diode starts to be reduced; and after the current of the first diode is reduced to zero, the primary side of the transformer circuit and the secondary side of the transformer perform discharge on the junction capacitor of the first switching element, the junction capacitor in the first switching element and the second inductance element start to perform resonance, and when a voltage of the first switching element is reduced to a minimum voltage value, the controller performs control to turn on the first switching element.

In an exemplary embodiment, in the case that the first rectifying element is a first synchronous rectifier tube, the transformer circuit is turned on before the first synchronous rectifier tube is turned off; then, a current flowing through the first synchronous rectifier tube is constantly reduced till a flow direction is changed; and after the first synchronous rectifier tube is turned off, the primary side circuit and the secondary side circuit of the transformer start to perform discharge on the junction capacitor of the first switching element and perform charge on a junction capacitor of the first synchronous rectifier tube till a voltage of the first switching element is reduced to zero, and after a parasitic diode of the first switching element is turned on, the controller performs control to turn on the first switching element.

In an exemplary embodiment, the transformer circuit is turned on after the first synchronous rectifier tube is turned off and before the first switching element is turned on.

In an exemplary embodiment, the first switching element includes one of the following: a switch, a triode, a field-effect tube, a relay and a diode; and the second switching element includes one of: a switch, a triode, a field-effect tube, a relay and a diode.

In an exemplary embodiment, the power conversion circuit includes one of the following: a buck topological circuit, a boost topological circuit, a negative-to-positive buck-boost topological circuit and a positive-to-positive buck-boost topological circuit.

According to the embodiment of the present invention, the current flowing through a first rectifier can be slowly reduced to zero before the first switching element is turned on, and meanwhile the voltage on the junction capacitor of the first switching element can also be greatly reduced before the first switching element is turned on. Accordingly, switching losses of various elements in the power conversion circuit can be greatly reduced so as to solve the problem that the losses are high in the related technologies.

### Brief Description of the Drawings

Fig. 1 is a circuit structure diagram of a buck-boost circuit provided by related technologies;
Fig. 2 is a current schematic diagram of the buck-boost circuit provided by the related technologies;
Fig. 3 is a current schematic diagram of another buck-boost circuit provided by the related technologies;
Fig. 4 is a current schematic diagram of another buck-boost circuit provided by the related technologies;
Fig. 5 is a structure diagram of a non-isolated soft switching circuit according to an embodiment of the present invention;
Fig. 6 is an application schematic diagram of a non-isolated soft switching circuit according to an embodiment of the present invention;
Fig. 7 is an application schematic diagram of another non-isolated soft switching circuit according to an embodiment of the present invention;
Fig. 8 is an application schematic diagram of another non-isolated soft switching circuit according to an embodiment of the present invention;
Fig. 9 is a circuit connection schematic diagram of a non-isolated soft switching circuit according to the embodiment of the present invention;
Fig. 10 is an element parameter changing curve schematic diagram of the non-isolated soft switching circuit according to the embodiment of the present invention;
Fig. 11 is a control process schematic diagram of the non-isolated soft switching circuit according to the embodiment of the present invention;
Fig. 12 is a control process schematic diagram of another non-isolated soft switching circuit according to an embodiment of the present invention;
Fig. 13 is a control process schematic diagram of another non-isolated soft switching circuit according to an embodiment of the present invention;
Fig. 14 is a control process schematic diagram of another non-isolated soft switching circuit according to an embodiment of the present invention;
Fig. 15 is a control process schematic diagram of another non-isolated soft switching circuit according to an embodiment of the present invention;
Fig. 16 is a control process schematic diagram of another non-isolated soft switching circuit according to an embodiment of the present invention;
Fig. 17 is a circuit connection schematic diagram of another non-isolated soft switching circuit according to an embodiment of the present invention;
Fig. 18 is an element parameter changing curve schematic diagram of another non-isolated soft switching circuit according to an embodiment of the present invention;
Fig. 19 is a control process schematic diagram of another non-isolated soft switching circuit according to an embodiment of the present invention;
Fig. 20 is a control process schematic diagram of another non-isolated soft switching circuit according to an embodiment of the present invention;
Fig. 21 is a control process schematic diagram of another non-isolated soft switching circuit according to an embodiment of the present invention;
Fig. 22 is a control process schematic diagram of another non-isolated soft switching circuit according to an embodiment of the present invention;
Fig. 23 is a control process schematic diagram of another non-isolated soft switching circuit according to an embodiment of the present invention; and
Fig. 24 is a control process schematic diagram of another non-isolated soft switching circuit according to an embodiment of the present invention.

### Detailed Description of the Embodiments

It needs to be explained that terms such as "first" and "second" in Description and Claims of the present invention and above drawings are used for distinguishing similar objects but not necessarily used for describing specific sequences or precedence orders.

The embodiment provides a non-isolated soft switching circuit. Fig. 5 is a schematic circuit diagram of a non-isolated soft switching circuit according to an embodiment of the present invention. As shown in Fig. 5, the non-isolated soft switching circuit includes an input power supply 502, a power conversion circuit 504, a transformer circuit 506, a controller 508 and a load 510, wherein
1) the power conversion circuit 504 includes a first inductance element, a first switching element and a first rectifying element, and the first inductance element is respectively connected to the first switching element and the first rectifying element;
2) a primary side circuit of the transformer circuit 506 is connected to the first switching element in parallel, and a secondary side circuit of the transformer circuit is connected to the first rectifying element in parallel;
3) the controller 508 is respectively connected to the first switching element and the transformer circuit;
4) the input power supply 502 is connected to the first inductance element through the first switching element; and
5) the load 510 is connected to the power conversion circuit 504 and the transformer circuit 506.

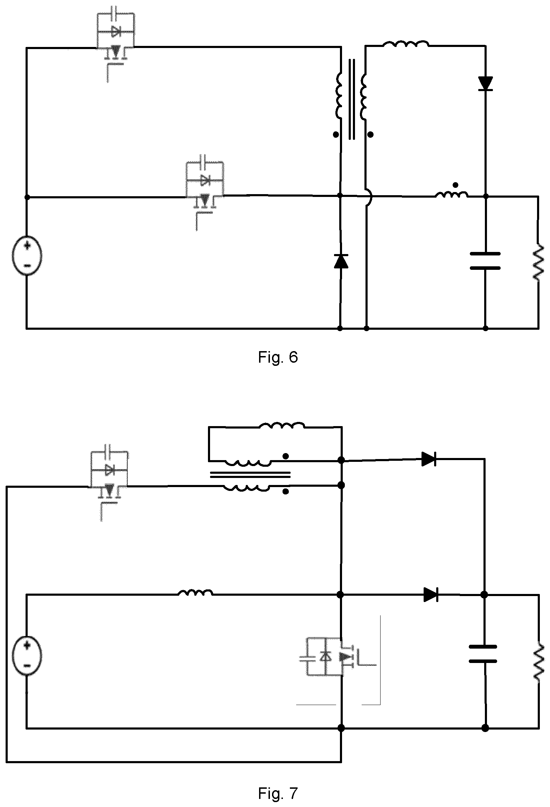

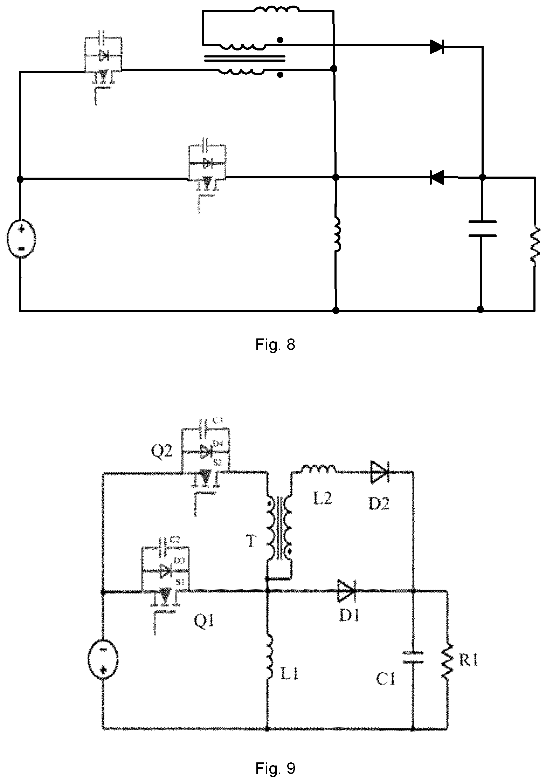

Optionally, in the embodiment, the above non-isolated soft switching circuit can be applied to but not limited to a buck-boost circuit in a direct current power distribution system. The power conversion circuit can include but not limited to one of the following: a buck topological circuit structurally shown in Fig. 6, a boost topological circuit structurally shown in Fig. 7, a negative-to-positive buck-boost topological circuit structurally shown in Fig. 1, and a positive-to-positive buck-boost topological circuit structurally shown in Fig. 8. Specifically, when the load is high, the newly-added transformer circuit is controlled so that a current flowing through the first rectifying element can be slowly reduced to zero before the first switching element is turned on, and meanwhile a voltage before the first switching element is turned on can be greatly reduced. Accordingly, turn-on losses of the switching element in the power conversion circuit, losses of a junction capacitor in the switching element and reverse recovery losses of the rectifying element can be reduced, and then the problem that switching losses are high in the related technologies is solved.

Optionally, in the embodiment, the transformer circuit includes a primary side circuit and a secondary side circuit, wherein the primary side circuit includes a primary side of a transformer and a second switching element, and the primary side of the transformer is connected to the second switching element in series. The secondary side circuit includes a secondary side of the transformer, a second rectifying element and a second inductance element, wherein the secondary side of the transformer, the second rectifying element and the second inductance element are connected in series.

In addition, in the embodiment, the first switching element can include but not limited to one of the following: a switch, a triode, a field-effect tube, a relay and a diode; and the second switching element can include but not limited to one of: a switch, a triode, a field-effect tube, a relay and a diode. Each of the first rectifying element and the second rectifying element can include but not limited to a diode and a synchronous rectifier tube. Optionally, in the embodiment, the load can be but not limited to be connected to the first inductance element through the first rectifying element.

The above contents are examples, which are not limited in the embodiment.

Optionally, in the embodiment, the power conversion circuit can work in a continuous conduction mode, and a minimum current flowing through the first inductance element can be but not limited to be greater than 0.

Specifically, explanations are made according to an example shown in Fig. 9: assuming that a first switching element Q1 includes a switch S1, a diode D3 and a junction capacitor C2, a second switching element Q2 includes a switch S2, a diode D4 and a junction capacitor C3, a first rectifying element is a diode D1, and a second rectifying element is a diode D2. In addition, the circuit further includes a first inductance element L1, a second inductance element L2, a transformer T, a capacitor C1 and a parallel load R1. Based on the above circuit structure, a circuit control process can be as below:
in a preset power conversion period (a duration between adjacent two-time Q1 conduction), before the Q1 in the power conversion circuit is turned on, the transformer circuit is controlled to be turned on so that a closed loop can be formed between the primary side circuit of the transformer circuit and the Q1, and meanwhile a closed circuit is formed between the secondary side circuit of the transformer circuit and the D1. Accordingly, when the Q2 in the transformer circuit is turned on, a voltage across the Q1 is applied to the primary side of the transformer T, and the secondary side of the transformer also generates a corresponding voltage according to a voltage mapping principle of the transformer. Since a voltage across the D1 is zero, a voltage across the L2 and the voltage of the secondary side of the transformer T are the same but opposite in direction. A current flowing through the L2 is constantly increased, the D2 is turned on in a forward direction, and the primary side of the transformer T is about to generate a corresponding induced current. According to a Kirchhoff's law, a current flowing through the D1 is constantly reduced to zero. Accordingly, reverse recovery losses of the D1 are greatly reduced or avoided.

Furthermore, after the current of the D1 is reduced to zero, a current of the primary side circuit and the secondary side circuit of the transformer T start to perform discharge on the junction capacitor in the Q1. Thus, the voltage across the Q1 and the voltage of the primary side and the secondary side of the transformer T start to be reduced at the same time, the voltage across the D1 starts to be increased, and the rising velocity of the current flowing through the D2 becomes low and then starts to be reduced. The junction capacitor in the Q1 and the L2 start to perform resonance, and when the voltage across the Q1 is reduced to a lowest point, the controller controls the Q1 to be turned on. Accordingly, turn-on losses of the Q1 can be greatly reduced.

Then, in the power conversion period, after the Q1 is turned on and before the Q1 is turned off, the controller performs control to turn off the transformer circuit, and accordingly, input power of the input power supply is converted into output power of the load by the L1 and is not shunted by the transformer circuit.

According to the embodiment provided by the present invention, the newly-added transformer circuit controls the current flowing through the first switching element in the power conversion circuit to be slowly reduced to zero before conduction, accordingly, when the first switching element is repeatedly turned on, losses on various elements in the power conversion circuit caused by instantaneous current changes can be reduced, and then the problem that the switching losses are high in the related technologies is solved.

As an optional implementation scheme, the transformer circuit includes a transformer, a second switching element, a second rectifying element and a second inductance element, wherein
1) a primary side circuit of the transformer circuit includes a primary side of the transformer and the second switching element, wherein the primary side of the transformer is connected to the second switching element in series; and
2) a secondary side circuit of the transformer circuit includes a secondary side of the transformer, the second rectifying element and the second inductance element, wherein the secondary side of the transformer, the second rectifying element and the second inductance element are connected in series.

Optionally, in the embodiment, the transformer circuit further includes a third inductance element, wherein the third inductance element is connected to the primary side circuit of the transformer circuit in series. It needs to be explained that when the primary side circuit of the transformer circuit is connected to the third inductance element in series, the second inductance element in the secondary side circuit can be replaced.

In addition, in the embodiment, the transformer circuit supports forward current conduction and reverse current cut-off, wherein, a flow direction of the forward current is a direction that a current generated by the first inductance element under excitation of the input power supply flows through the transformer circuit, and the reverse current is opposite to the forward current in direction.

Optionally, in the embodiment, a turn ratio between the primary side and the secondary side of the transformer can be but not limited to be set into different values according to actual demands so as to regulate the current flowing through the transformer and related voltages on the transformer. In a transformer coupling direction, the primary side circuit and the secondary side circuit of the transformer can be turned on in the forward direction at the same time.

Optionally, in the embodiment, the second inductance element in the transformer circuit can be but not limited to inductance realization, and can also be but not limited to transformer leakage inductance realization.

According to the embodiment provided by the present invention, the current flowing through the power conversion circuit is controlled by the transformer, the switching elements, the inductance elements and the rectifying elements in the primary side circuit and the secondary side circuit in the transformer circuit. The transformer circuit serves as a soft switch to realize elastic control over the power conversion circuit, thereby solving a problem of high losses caused by instantaneous changes.

As an optional implementation scheme, the controller is configured to control on-off states of the first switching element and the second switching element.

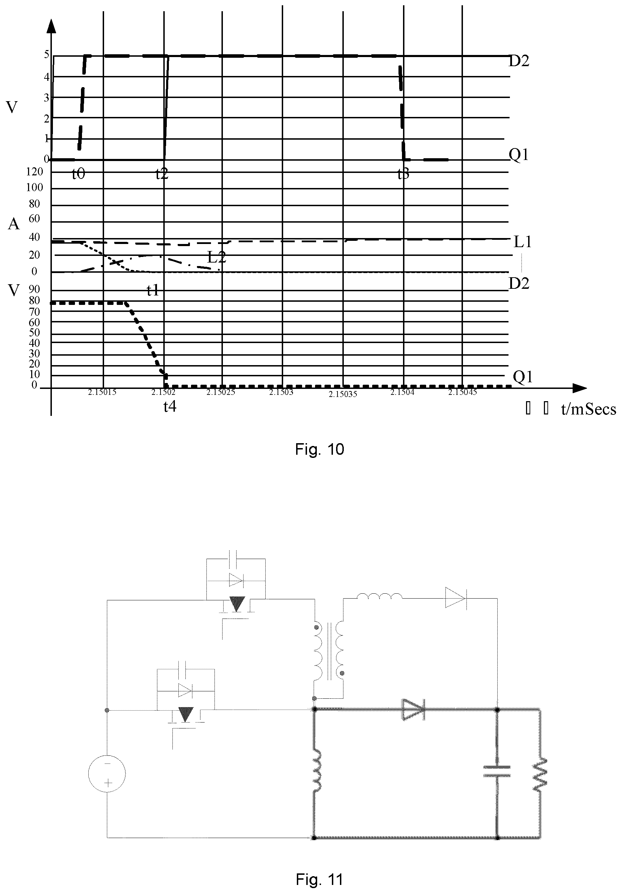

Assuming that explanations continue according to the example shown in Fig. 9, a control mode of the controller and a typical waveform during circuit working can be shown in Fig. 10, where in a first voltage change curve graph in Fig. 10, a segment-segment curve indicates a voltage change of the D2, and a full line indicates a Vgs voltage change of the Q1. In a second current change curve graph in Fig. 10, a segment-segment curve indicates a current change of the L1, point-line indicates a current change of the L2, and a point-point curve indicates a current change of the D2. A third voltage change curve graph in Fig. 10 indicates a Vds voltage change of the Q1.

According to the embodiment provided by the present invention, the controller controls the on-off states of the first switching element and the second switching element so as to realize flexible on-off control between the input power supply and the inductance elements, and then the inductance elements convert the input power supplied by the input power supply to the power conversion circuit into the output power of the load.

As an optional implementation scheme, when the first rectifying element is a first diode, the controller is further configured to perform control, in a preset power conversion period, to turn on the transformer circuit before the first switching element is turned on, accordingly, a closed loop can be formed between the primary side circuit of the transformer circuit and the first switching element, and a closed circuit can be formed between the secondary side circuit of the transformer circuit and the first diode, where the power conversion period is a duration of adjacent two-time closing of the first switching element. The power conversion period T can also be called as a voltage conversion period, which refers to a duration that an inductor starts to store electric energy during Q1 closing and then releases the electric energy during Q1 opening till next-time Q1 closing, and namely a duration of adjacent two-time closing.

Optionally, in the embodiment, the controller is further configured to perform control, in the power conversion period, to turn off the transformer circuit after the first switching element is turned on and before the first switching element is turned off.

Optionally, in the embodiment, before the first switching element is turned on, a current of the first diode starts to be reduced; and after the current of the first diode is reduced to zero, the primary side of the transformer circuit and the secondary side of the transformer perform discharge on the junction capacitor of the first switching element, the junction capacitor in the first switching element and the second inductance element start to perform resonance, and when a voltage of the first switching element is reduced to a minimum voltage value, the controller performs control to turn on the first switching element.

Explanations are specifically made by combining a following example: assuming that a circuit structure of the above non-isolated soft switching circuit can be shown as Fig. 9, where a power conversion circuit includes a first inductance element L1, a first switching element Q1 and a first diode D1, and the transformer circuit includes a transformer T, a second inductance element L2, a second switching element Q2 and a second diode D2. A circuit control process can be as below:

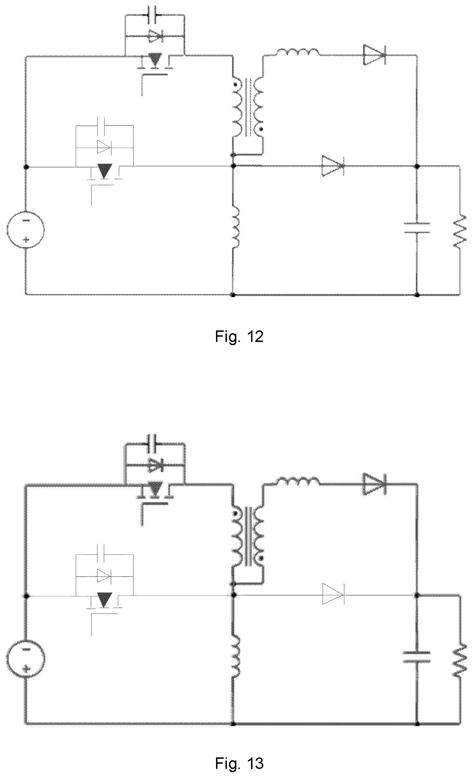

Fig. 11 shows a circuit working state before the Q1 and the transformer circuit are turned on in a preset power conversion period. The Q2 is turned on at time t0, a closed loop is formed between a primary side circuit of the transformer circuit and the Q1, and meanwhile a closed circuit is formed between a secondary side circuit of the transformer circuit and the D1, which are shown in Fig. 12. At the time, a voltage across the Q1 is applied to a primary side of the transformer, and a secondary side of the transformer also generates a corresponding voltage according to a voltage mapping principle of the transformer. Since a voltage across the D1 is zero, a voltage across the L2 and the voltage of the secondary side of the transformer are the same but opposite in direction. A current flowing through the L2 is constantly increased, the second diode is turned on in a forward direction, and the primary side of the transformer generates a corresponding induced current. According to a Kirchhoff's law, a current flowing through the D1 is constantly reduced to zero. Thus, reverse recovery losses of the D1 are greatly reduced or avoided.

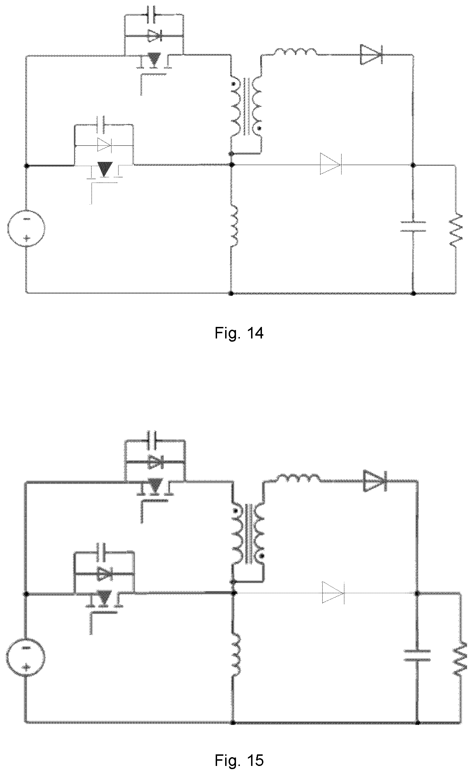

At time t1, the current flowing through the D1 is reduced to zero, which is shown in Fig. 13. Then, the current of the primary side and the secondary side of the transformer start to perform discharge on the junction capacitor in the Q1, which is shown in Fig. 14. Thus, the voltage across the Q1 and the voltage of the primary side and the secondary side of the transformer start to be reduced at the same time, the voltage across the D1 starts to be increased, and the rising velocity of the current flowing through the D2 becomes low and then starts to be reduced. The junction capacitor in the Q1 and the L2 start to perform resonance, and when the voltage across the Q1 is reduced to a lowest point at time t2, a controller controls the Q1 to be turned on, which is shown in Fig. 15. Thus, turn-on related losses of the Q1 can be greatly reduced.

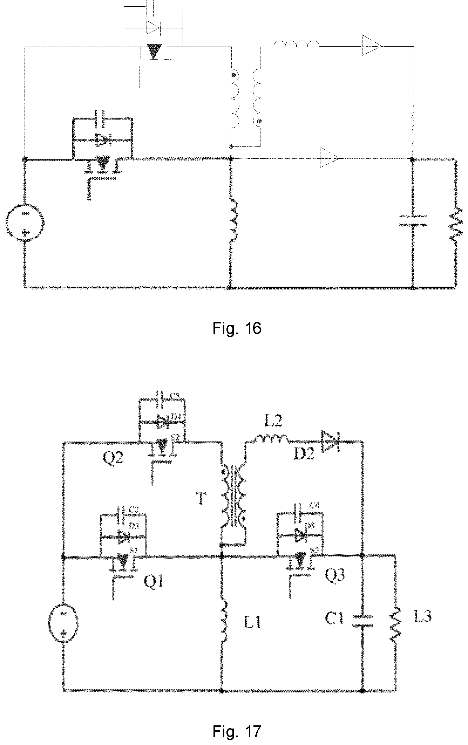

In the power conversion period, after the Q1 is turned on and before the Q1 is turned off, the transformer circuit is controlled to be turned off at time t3, as shown in Fig. 16, an input power supply transmits energy to a load only through the power conversion circuit 504 without shunt by the transformer circuit.

According to the embodiment provided by the present invention, when the first rectifying element is the diode, the current flowing through the first rectifying element can be slowly reduced under control of various components in the transformer circuit, and thus losses of circuit elements caused by frequent turn-on or turn-off under a situation of the high load are avoided.

As an optional implementation scheme, when the first rectifying element is a first synchronous rectifier tube, the transformer circuit is turned on before the first synchronous rectifier tube is turned off; then, a current flowing through the first synchronous rectifier tube is constantly reduced till a flow direction is changed; and after the first synchronous rectifier tube is turned off, the primary side circuit and the secondary side circuit of the transformer start to perform discharge on the junction capacitor of the first switching element and perform charge on a junction capacitor of the first synchronous rectifier tube till a voltage of the first switching element is reduced to zero, and after a parasitic diode of the first switching element is turned on, the controller performs control to turn on the first switching element.

Optionally, in the embodiment, the transformer circuit is turned on after the first synchronous rectifier tube is turned off and before the first switching element is turned on. A working principle herein can refer to the principle in the above embodiment.

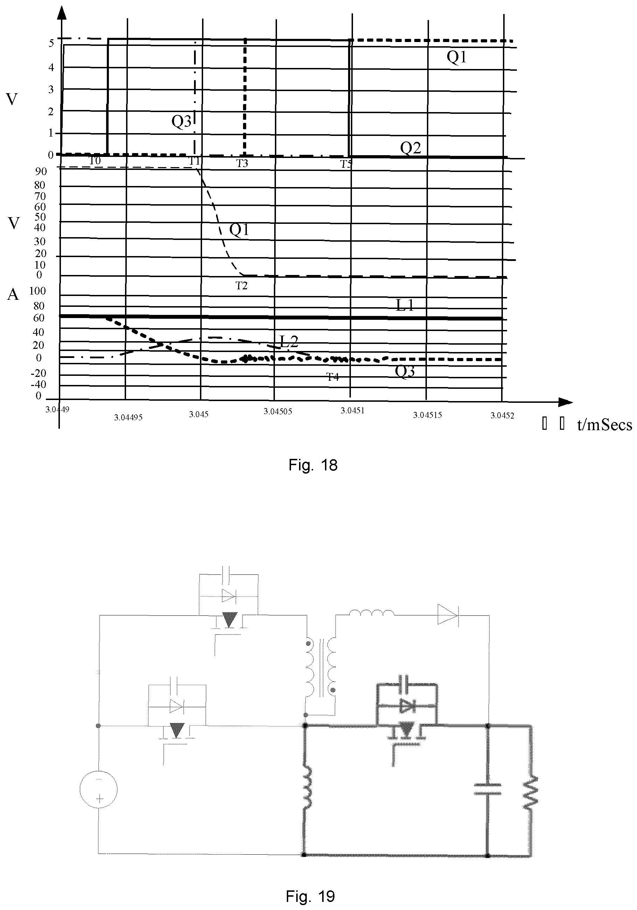

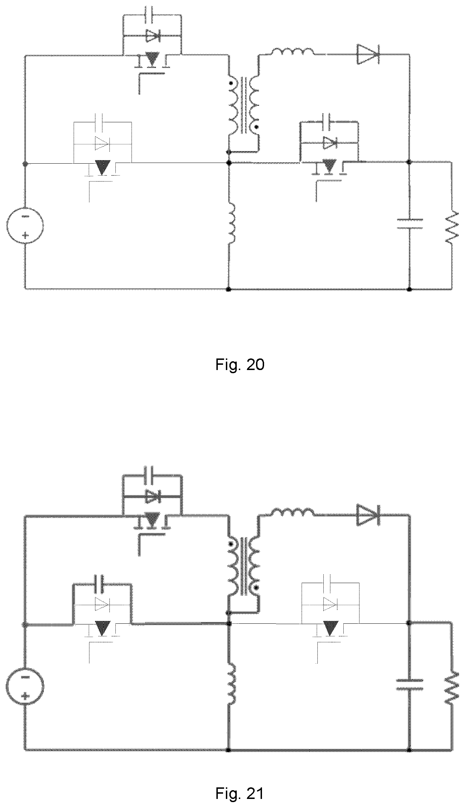

Optionally, in the embodiment, the above first diode can be replaced with the first synchronous rectifier tube, a circuit of the first synchronous rectifier tube can be shown as Fig. 17, and it is assumed that the first synchronous rectifier tube Q3 includes a capacitor C4, a diode D5 and a switch S3. Under the above situation, a control mode of the controller and a typical waveform during circuit working can be shown in Fig. 18, where in a first voltage change curve graph in Fig. 18, point-point indicates a Vgs voltage change of the Q1, a full line indicates a Vgs voltage change of the Q2, and a point-line curve indicates a Vgs voltage change of the Q3. In a second current change curve graph in Fig. 18, a segment-segment curve indicates a Vds voltage change of the Q1. In a third current change curve graph in Fig. 18, point-point indicates a current change of the Q3, a curve formed by a full line is a current change of the L1, and a point-line curve indicates a current change of the L2. A circuit control process can be as below:
as shown in Fig. 19, the Q3 is turned on during the time when the Q1 is turned off so as to reduce conduction losses of the Q3. The Q2 is turned on at time T0. Then, a current flowing through the L2 starts to be increased, and a current flowing through the Q3 starts to be reduced, which are shown in Fig. 20. After the current flowing through the Q3 is reduced to zero and is in reverse, the Q3 is turned off at time T1. Accordingly, reverse recovery losses possibly happening to the diode in the Q3 can be completely avoided.

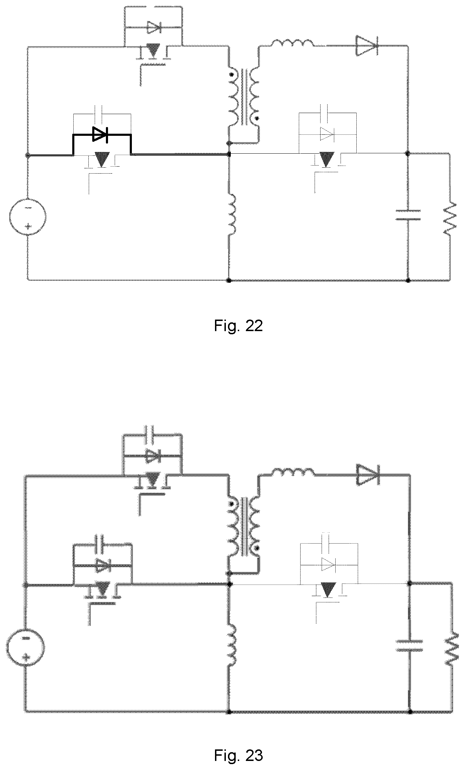

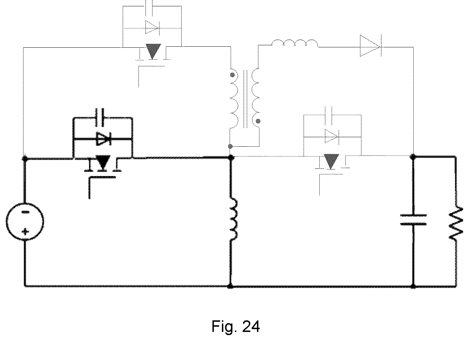

After the Q3 is turned off, the current of the primary side and the secondary side of the transformer starts to perform discharge on the junction capacitor in the Q1 and perform charge on the junction capacitor in the Q3, which is shown in Fig. 21. At time T2, a voltage across the Q1 is completely reduced to zero, and then, a parasitic diode in the Q1 is turned on, which is shown in Fig. 22. At time T3, the controller controls the Q1 to be turned on, which is shown in Fig. 23. Thus, the Q1 can realize Zero Voltage Switch (ZVS) turn-on. At time T4, the current flowing through the L2 is reduced to zero, and at time T5, the Q2 is turned off, which is shown in Fig. 24. The time T5 happens before the Q1 is turned off.

According to the embodiment provided by the present invention, when the first rectifying element is the synchronous rectifier tube, the current flowing through the switching element can slowly change under control of various components in the transformer circuit, and thus losses of circuit elements caused by frequent turn-on or turn-off under a situation of the high load are avoided.

By describing the above implementation modes, those skilled in the art can clearly know that the method according to the above embodiments can be realized by means of the software and necessary universal hardware platforms and also can be realized through the hardware, but the former is the better implementation mode under many situations. Based on the understanding, technical schemes of the present invention essentially or parts making contribution to the related technologies can be embodied in a software product form. A computer software product is stored in a storage medium (e.g., a Read-Only Memory (ROM)/a Random Access Memory (RAM), a disk and a light disk), which includes a plurality of instructions enabling one terminal device (a mobile phone, or a computer, or a server or a network device, etc.) to execute the method according to various embodiments of the present invention.

Obviously, those skilled in the art should understand that modules or steps in the present invention can be realized through a universal computing device, can be centralized in a single computing device or distributed in a network formed by a plurality of computing devices and can be realized by program codes capable of being executed by the computing device so that the modules or the steps can be stored in a storage unit to be executed by the computing device; and the shown or described steps can be executed in sequence different from the sequence herein under some situations, or the modules and steps can be made into various integrated circuit modules, or more of the modules or the steps can be made into single integrated circuit modules to be realized. Thus, the present invention is not limited to any specific hardware and software combination.

The above embodiments are merely preferred embodiments of the present invention but are not used for limiting the present invention, and the present invention can be variously modified and changed for those skilled in the art. Any modification, equivalent replacement, improvement, etc. made within the principle of the present invention shall fall within the scope of protection of the present invention.

### Industrial applicability

In the embodiment of the present invention, the current flowing through a first rectifier can be slowly reduced to zero before the first switching element is turned on, and meanwhile the voltage on the junction capacitor of the first switching element can also be greatly reduced before the first switching element is turned on. Accordingly, switching losses of various elements in the power conversion circuit can be greatly reduced so as to solve the problem that the losses are high in the related technologies.

## Claims

1. A non-isolated soft switching circuit, comprising: an input power supply, a power conversion circuit, a transformer circuit, a controller and a load, wherein
the power conversion circuit comprises: a first inductance element, a first switching element and a first rectifying element, and the first inductance element is respectively connected to the first switching element and the first rectifying element;
a primary side circuit of the transformer circuit is connected to the first switching element in parallel, and a secondary side circuit of the transformer circuit is connected to the first rectifying element in parallel;
the controller is respectively connected to the first switching element and the transformer circuit;
the input power supply is connected to the first inductance element through the first switching element; and
the load is connected to the power conversion circuit and the transformer circuit.

2. The non-isolated soft switching circuit according to claim 1, wherein the transformer circuit comprises a transformer, a second switching element, a second rectifying element and a second inductance element, wherein
the primary side circuit of the transformer circuit comprises a primary side of a transformer and the second switching element, and the primary side of the transformer is connected to the second switching element in series; and
the secondary side circuit of the transformer circuit comprises a secondary side of the transformer, a second rectifying element and a second inductance element, and the secondary side of the transformer, the second rectifying element and the second inductance element are connected in series.

3. The non-isolated soft switching circuit according to claim 2, wherein the transformer circuit further comprises a third inductance element, wherein the third inductance element is connected to the primary side circuit of the transformer circuit in series.

4. The non-isolated soft switching circuit according to claim 2, wherein the controller (508) is configured to control on-off states of the first switching element and the second switching element.

5. The non-isolated soft switching circuit according to claim 4, wherein in a case that the first rectifying element is a first diode, the controller is further configured to perform control, before the first switching element is turned on in a preset power conversion period, to turn on the transformer circuit, so that a closed loop can be formed between the primary side circuit of the transformer circuit and the first switching element, and meanwhile a closed circuit can be formed between the secondary side circuit of the transformer circuit and the first diode, wherein the power conversion period is a duration of adjacent two-time closing of the first switching element.

6. The non-isolated soft switching circuit according to claim 5, wherein the controller is further configured to perform control, in the power conversion period, to turn off the transformer circuit after the first switching element is turned on and before the first switching element is turned off.

7. The non-isolated soft switching circuit according to claim 5, wherein before the first switching element is turned on, a current of the first diode starts to be reduced; and after the current of the first diode is reduced to zero, the primary side of the transformer circuit and the secondary side of a transformer perform discharge on a junction capacitor of the first switching element, the junction capacitor in the first switching element and the second inductance element start to perform resonance, and when a voltage of the first switching element is reduced to a minimum voltage value, the controller performs control to turn on the first switching element.

8. The non-isolated soft switching circuit according to claim 4, wherein in the case that a first rectifying element is a first synchronous rectifier tube, the transformer circuit is turned on before the first synchronous rectifier tube is turned off; then, a current flowing through the first synchronous rectifier tube is constantly reduced till the flow direction is changed; and after the first synchronous rectifier tube is turned off, the primary side circuit and the secondary side circuit of the transformer start to perform discharge on a junction capacitor of the first switching element and perform charge on a junction capacitor of the first synchronous rectifier tube till a voltage of the first switching element is reduced to zero, and after a parasitic diode of the first switching element is turned on, the controller performs control to turn on the first switching element.

9. The non-isolated soft switching circuit according to claim 8, wherein the transformer circuit is turned on after the first synchronous rectifier tube is turned off and before the first switching element is turned on.

10. The non-isolated soft switching circuit according to any one of claims 2 to 9, wherein the first switching element comprises one of the following: a switch, a triode, a field-effect tube, a relay and a diode; and a second switching element comprises one of the following: a switch, a triode, a field-effect tube, a relay and a diode.

11. The non-isolated soft switching circuit according to any one of claims 1 to 9,wherein a power conversion circuit comprises one of the following: a buck topological circuit, a boost topological circuit, a negative-to-positive buck-boost topological circuit and a positive-to-positive buck-boost topological circuit.
